# FASCICULE DE BREVET EUROPEEN

(11) **EP 1 697 757 B1**
(45) Date de publication et mention de la délivrance du brevet: **18.03.2009**
(21) Numéro de dépôt: 04816361.2
(22) Date de dépôt: 06.12.2004
(51) Int. Cl.: G01S 1/00, G01S 5/14, G04G 7/00

(54) **PROCEDE DE MISE A JOUR DU BIAIS D'HORLOGE EXISTANTE ENTRE UNE STATION BTS D'UN RESEAU GSM ET LES SATELLITES D'UN SYSTEME GPS**
VERFAHREN ZUM AKTUALISIEREN DES TAKTVERSATZES ZWISCHEN EINER BTS-STATION EINES GSM-NETZWERKS UND DEM SATELLITEN EINES GPS-SYSTEMS
METHOD OF UPDATING THE CLOCK BIAS BETWEEN A BTS STATION OF A GSM NETWORK AND THE SATELLITES OF A GPS SYSTEM

(30) Priorité: 16.12.2003 FR 0314699
(43) Date de publication de la demande: 06.09.2006
(73) Titulaire: Alcatel Lucent, 75008 Paris (FR)
(72) Inventeur: Monnerat, Michel, F-31240 L'Union (FR)
(74) Mandataire: Hedarchet, Stéphane
(86) Numéro de dépôt international: PCT/FR2004/003135
(87) Numéro de publication internationale: WO 2005/059583

(56) Documents cités:
- WO-A-03/067396
- US-A1- 2002 173 322
- US-A1- 2003 187 575
- US-B1- 6 429 808
- US-B1- 6 429 811

## Description

La présente invention concerne un procédé de mise à jour de l'horloge d'une station radio d'un système de radiotéléphonie cellulaire comportant au moins un serveur d'assistance pour l'amélioration de l'acquisition de données satellitaires.

Dans le domaine de la téléphonie mobile, il s'avère de plus en plus nécessaire de pouvoir localiser les téléphones mobiles.

Pour cela, il est connu d'associer un dispositif de radiotéléphonie cellulaire, du type téléphone mobile GSM (Global System for Mobile communications) par exemple, à un récepteur RNSS (Radio Navigation Satellite System) tel qu'un récepteur du type GPS (Global Positioning System), GLONASS ou GALILEO par lequel le dispositif mobile capte des émissions en provenance de satellites pour connaître sa position. De cette manière, en cas d'accident de la circulation par exemple, le dispositif mobile peut calculer et émettre sa position.

La détermination de la position du dispositif peut se faire de la manière suivante : une pluralité de satellites émet en permanence un signal daté à destination du récepteur. Le récepteur, dans le cas où il serait synchronisé sur l'horloge des satellites, pourrait alors mesurer le temps de propagation de ce signal et en déduire une distance le séparant d'un satellite particulier. A partir de trois satellites, un tel récepteur est capable d'effectuer une triangulation pour déterminer sa position. Chaque mesure de temps de propagation représente le rayon d'une sphère centrée sur un satellite particulier, le récepteur étant situé sur cette sphère. Avec deux mesures de distance, la position d'un récepteur est sur un cercle formé par l'intersection de deux sphères. Une troisième mesure simultanée réduit l'intersection à deux points, dont un est très éloigné dans l'espace et est aisément isolé.

Toutefois, l'horloge du récepteur est affectée d'un biais ΔT car elle n'est pas totalement synchrone du système GPS. En effet, les horloges atomiques des satellites GPS ont un niveau de précision très élevé mais la précision du récepteur GPS, plus rudimentaire, est fatalement beaucoup moins précise Ce biais ΔT d'horloge est donc la différence de temps entre l'horloge du récepteur et l'horloge des satellites et peut atteindre plusieurs secondes. Il se traduit par une erreur de mesure de temps de propagation des signaux GPS et, par la même, par une erreur c.ΔT sur les distances satellite- récepteur où c est la vitesse de la lumière. Cette erreur se retrouve sur toutes les distances mesurées par le récepteur. Comme les distances ne sont pas parfaites puisqu'elles sont entachées d'un biais de temps, elles sont appelées pseudo distances. Le biais de temps a priori inconnu doit être déterminé.

Il existe donc une quatrième inconnue pour laquelle il est nécessaire de mesurer au moins une distance supplémentaire, donc de disposer d'au moins quatre satellites, pour résoudre un système de quatre équations à quatre inconnues.

Le signal émis par chaque satellite est un signal à spectre étalé par un code pseudo aléatoire modulé en phase ; le récepteur GPS doit ensuite faire l'acquisition de ce signal. Le récepteur génère localement une réplique du signal. Le récepteur retarde ensuite le début de cette réplique jusqu'à ce qu'elle se superpose avec celui provenant du satellite. La détermination de ce retard se fait par une technique de corrélation des deux signaux. La valeur de ce retard est ainsi le temps mis par le signal pour se propager du satellite jusqu'à l'utilisateur. Ce genre de mesure demande une immense précision (meilleure que 100 nanosecondes) puisque le temps mis par le signal pour effectuer un tel trajet est de l'ordre de 1/20ème de seconde. Toutefois, comme l'horloge du récepteur GPS n'est jamais totalement synchronisée sur celle des satellites, le récepteur va donc devoir constamment ajuster son horloge par approximations successives afin de parvenir à la corrélation maximale des deux signaux. L'acquisition du signal nécessite donc un balayage en temps très important par le récepteur.

En outre, le signal émis par chaque satellite est transmis à une fréquence connue et égale à 1575,42 MHz. L'effet Doppler du satellite auquel se superpose une incertitude de l'horloge locale du récepteur entraîne une incertitude approximative de +/- 5 kHz sur le signal reçu par le récepteur GPS. Or le signal généré localement par le récepteur doit avoir la même fréquence que le signal émis par le satellite pour obtenir une bonne corrélation. Ainsi, le récepteur, outre le balayage temporel, doit effectuer un balayage fréquentiel afin de déterminer le temps mis par le signal pour se propager du satellite jusqu'à l'utilisateur.

Les balayages en temps et en fréquence évoqués ci-dessus impliquent une puissance de calcul et un temps de traitement de données très importants pour le récepteur.

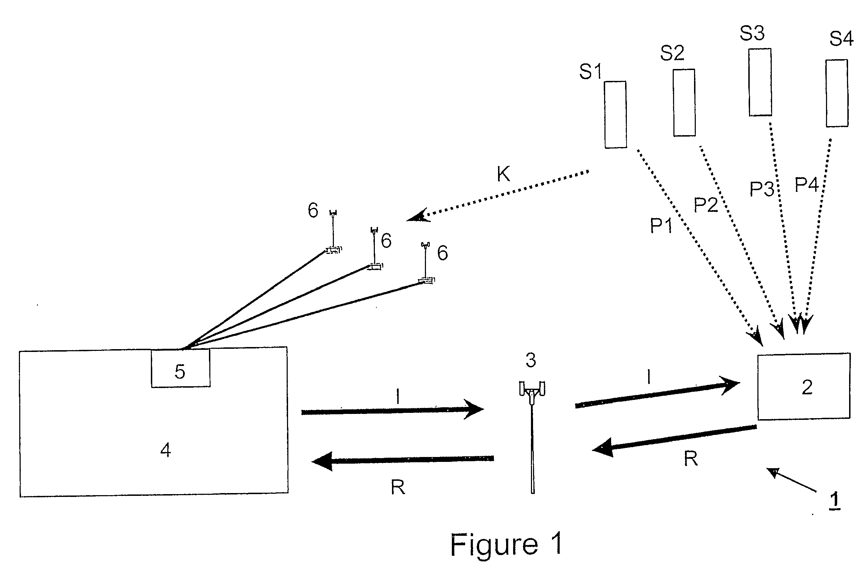

Une solution consiste à utiliser un serveur d'assistance au récepteur GPS du dispositif mobile de manière à augmenter sa sensibilité en diminuant la surface temps-fréquence à balayer. Un tel serveur est décrit dans le document « Indoor GPS Technology » (F. van Diggelen et al., CTIA Wireless-Agenda, Dallas, Mai 2001). Cette technologie est appelée A-GPS (Assisted GPS). La figure 1 représente un système 1 de télécommunication utilisant un tel serveur d'assistance 5. Un dispositif mobile 2 tel qu'un téléphone portable fonctionnant sur un réseau téléphonique 4 du type GSM et comportant un récepteur GPS cherche à calculer sa position à partir de signaux P1 à P4 émis par au moins un des satellites S1 à S4. Pour cela, le dispositif 2 envoie une requête R sous la forme d'un signal radio sur le réseau téléphonique 4. Cette requête R transite via une station radio de base 3 du type BTS (Base Transceiver Station) associée à la cellule dans laquelle se trouve le dispositif mobile 2. La requête R est traitée par le serveur 5 qui reçoit en temps réel des informations satellitaires via des stations radio 6 fixes et équipées de récepteurs GPS recevant des informations K. En réponse à la requête R, le serveur 5 envoie des informations I vers le dispositif mobile 2, lesdites informations transitant par la station BTS 3. Ces informations contiennent par exemple les éphémérides des satellites S1 à S4. Grâce à ces informations, le dispositif mobile 2 peut déterminer l'effet Doppler des satellites et réduire considérablement son balayage en fréquence. Notons que deux types de technologie A-GPS existent : une première technologie A-GPS est appelée MS-based (Mobile Station based) et une deuxième technologie est appelée MS-assisted (Mobile Station assisted). Dans le cas de la technologie MS-based, le calcul de la position du dispositif mobile 2 est réalisé par le dispositif mobile lui-même. Dans le cas de la technologie MS-assisted, le calcul de la position du dispositif mobile 2 est réalisé par le serveur 5.

Dans le cas de réseaux téléphoniques synchrones du type CDMA (« Code Division Multiple Access » ou Accès multiple à répartition par code) ou CDMA 2000 utilises aux USA, le balayage en temps est beaucoup moins critique puisque chacun des émetteur-récepteurs est synchronisé. Ainsi, en utilisant un serveur d'assistance avec un réseau synchrone, on réduit de manière très importante le balayage à la fois en temps et en fréquence. Par contre, dans le cas de réseau asynchrone tel que les réseaux GSM ou UMTS utilisant l'AMRT (Accès Multiple à Répartition dans le Temps), la question du balayage temporel reste très importante même en utilisant un serveur d'assistance puisque les horloges de chaque émetteur-récepteur peuvent varier considérablement.

Le document US2003/0187575 décrit la résolution du biais d'horloge entre l'horloge locale d'un récepteur GPS et une constellation de satellites. Le document US6424811 B1 décrit une méthode de compression de messages de diffusion satellite GPS.

Une solution connue à ce problème est décrite dans le document « Analysis of GPS time-transfer accuracy in GSM and UMTS networks and possibilities to improve sensitivity » (J. Syrjärinne, ION GPS 2002, 24-27 Septembre 2002). Cette solution consiste à équiper chaque station de base BTS 3 telle que représentée en figure 1 d'un récepteur GPS. Ainsi, la station de base 3 peut, après calcul de sa position et du biais d'horloge existant entre elle et les satellites, déterminer l'horloge commune des stellites et transmettre cette horloge GPS au dispositif mobile 2 par un marquage du signal d'informations I. Cette horloge transmise au dispositif mobile 2 est assez précise dans la mesure où elle n'est affectée que par le temps de transmission de quelques microsecondes entre la station de base 3 et le dispositif mobile 2. Ce temps de transmission est faible puisque le dispositif mobile 2 se trouve dans la cellule associée à la station de base 3 et que le diamètre d'une cellule telle qu'une cellule GSM varie de 300 m à 30 km suivant le relief géographique et la densité de population.

Toutefois, la mise en oeuvre d'une telle solution pose certaines difficultés. Ainsi, cette solution est extrêmement coûteuse car elle induit un nombre important de modifications du réseau avec l'installation d'un récepteur GPS sur chaque station radio de base du typé BTS.

La présente invention vise à fournir un procédé de mise à jour du biais d'horloge existant entre l'horloge commune des satellites d'un système de radionavigation satellitaire RNSS et l'horloge d'une station radio du type BTS d'un réseau asynchrone de radiotéléphonie cellulaire tel qu'un réseau GSM, ledit procédé permettant aux dispositifs mobiles dudit réseau cellulaire équipés d'un récepteur de radionavigation satellitaire RNSS d'avoir accès de façon simple et économique à ce biais d'horloge.

La présente invention propose à cet effet un procédé de mise à jour du biais d'horloge existant entre l'horloge commune des satellites d'un système de radionavigation satellitaire RNSS et l'horloge d'une station radio d'un système asynchrone de radiotéléphonie cellulaire, ledit système asynchrone de radiotéléphonie cellulaire comportant en outre :
- au moins un dispositif mobile incluant un récepteur de radionavigation satellitaire RNSS recevant des données satellitaires fournies par au moins quatre satellites,
- au moins un serveur d'assistance pour l'amélioration de l'acquisition de données satellitaires par ledit dispositif mobile, ledit procédé comportant les étapes suivantes :
- réception par ledit dispositif mobile d'une part desdites données satellitaires, et d'autre part de données d'assistance fournies par le serveur d'assistance pour déterminer l'effet Doppler lié aux signaux satellitaires,
- calcul par ledit dispositif mobile des pseudo distances entre ledit dispositif mobile et lesdits satellites,
- encapsulation desdites pseudo distances avec la date à laquelle lesdites pseudo distances ont été calculées,
- transmission desdites pseudo distances et de ladite date à laquelle lesdites pseudo distances ont été calculées sous la forme d'un signal radio dudit dispositif mobile vers ledit serveur d'assistance via un passage par ladite station radio,
- détermination par ledit serveur d'assistance de la position dudit dispositif mobile et estimation par ledit serveur du biais d'horloge entre l'horloge commune desdits satellites et l'horloge de ladite station radio en utilisant lesdites pseudo distances et ladite date à laquelle lesdites pseudo distances ont été calculées.

Grâce à l'invention, dans un réseau asynchrone du type GSM, un serveur d'assistance tel qu'un serveur A-GPS connaît, en utilisant les pseudo distances et la date à laquelle lesdites pseudo distances ont été calculées, le biais d'horloge existant entre une station radio telle qu'une station BTS et les satellites d'un système RNSS tel que le système GPS. De cette façon, la mise à jour du biais d'horloge d'une station radio particulière se fait à chaque fois qu'un serveur d'assistance calcule la position d'un dispositif mobile appartenant à une zone de type cellule associée à ladite station : c'est le cas des dispositifs mobiles utilisant une technologie MS-assisted. Ce procédé de mise à jour est donc un procédé auto-entretenu, simple et économique, qui ne nécessite aucune modification structurelle du réseau telle que l'ajout de récepteurs RNSS sur toutes les stations radio.

Selon un premier mode de réalisation, la date à laquelle lesdites pseudo distances ont été calculées correspond aux informations horaires fournies par ladite station radio.

Ainsi, la date à laquelle les pseudo distances ont été calculées est déterminée sur la base du signal d'échange entre le dispositif mobile et la station radio ; dans le cas d'un signal GSM par exemple, la datation des pseudo-distances se fait grâce à la structure du message GSM décomposé en hyper-trames elles-mêmes décomposées en super-trames elles-mêmes décomposées en multi-trames elles-mêmes décomposées en trames elles-mêmes décomposées en temps bit ; on peut associer un numéro à chacun de ces éléments (Hyper, super, multi-trames, trames, bit) correspondant à la date de calcul des pseudo-distances. Le serveur va ensuite déterminer la position du dispositif mobile ainsi que la différence de temps qui existe entre la datation du calcul des pseudo-distances et l'horloge des satellites GPS. Le serveur a donc directement accès au biais existant entre l'horloge de la station radio et l'horloge GPS.

Selon un deuxième mode de réalisation, la date à laquelle lesdites pseudo distances ont été calculées correspond à la date issue de l'horloge dudit dispositif mobile à laquelle lesdites pseudo distances ont été calculées, ledit procédé comportant les étapes suivantes :
- insertion par ledit dispositif mobile dans ledit signal radio de la date d'émission dudit signal radio par ledit dispositif mobile,
- insertion par ladite station radio dans ledit signal radio de la date de réception dudit signal radio par ladite station radio,
- détermination par ledit serveur d'assistance d'un premier biais d'horloge entre l'horloge dudit dispositif mobile et l'horloge commune desdits satellites,
- estimation par ledit serveur d'assistance d'un deuxième biais d'horloge entre l'horloge dudit dispositif mobile et l'horloge de ladite station radio en effectuant la différence entre ladite date d'émission et ladite date de réception,
- déduction du biais d'horloge entre l'horloge commune desdits satellites et l'horloge de ladite station radio en effectuant la différence entre lesdits premier et deuxième biais d'horloge.

Selon ce mode de réalisation, le serveur d'assistance tel qu'un serveur A-GPS connaît, par différence de deux biais d'horloge, le biais d'horloge existant entre la station radio BTS et les satellites du système GPS. Notons ici que le deuxième biais d'horloge entre l'horloge du dispositif mobile et l'horloge de la station radio est déterminé par le serveur en effectuant la différence entre la date d'émission par le mobile et la date de réception par la station. Ce deuxième biais est précis au temps de trajet prêt entre le mobile et la station. Ce temps de trajet de l'ordre de quelques microsecondes est négligeable devant les valeurs de ce deuxième biais d'horloge de l'ordre de plusieurs secondes.

Avantageusement, ledit biais d'horloge entre l'horloge commune desdits satellites et l'horloge de ladite station radio est enregistré dans une base de données de mise à jour.

La présente invention a en outre pour objet un serveur d'assistance pour l'amélioration de l'acquisition de données satellitaires par un dispositif mobile comportant une base de données de biais d'horloge existant entre l'horloge des stations radio d'un système asynchrone de radiotéléphonie cellulaire et l'horloge commune des satellites d'un système de radionavigation satellitaire.

Avantageusement, lesdits biais d'horloge sont mis à jour par un procédé de mise à jour selon l'invention.

La présente invention a également pour objet un procédé d'amélioration par un serveur d'assistance de l'acquisition de données satellitaires par un dispositif mobile comportant un récepteur de radionavigation satellitaire RNSS dans un système asynchrone de radiotéléphonie cellulaire comportant les étapes suivantes :
- envoi par ledit dispositif mobile d'une requête d'assistance vers ledit serveur d'assistance via un passage par une station radio associée au dit dispositif mobile,
- identification par ledit serveur du biais d'horloge entre l'horloge commune des satellites et l'horloge de ladite station radio mis à jour par un procédé de mise à jour selon l'invention.

Ainsi, le procédé d'amélioration par un serveur d'assistance utilise avantageusement le procédé de mise à jour des biais d'horloge selon l'invention.

Selon un premier mode de réalisation, ledit procédé d'amélioration par un serveur d'assistance comporte une étape de transmission de données d'assistance par ledit serveur d'assistance, lesdites données d'assistance comportant :
- lesdites informations horaires associées à ladite station radio et extraites à partir du biais d'horloge entre l'horloge commune des satellites et l'horloge de ladite station radio mis à jour par un procédé de mise à jour selon le premier mode de réalisation de l'invention,
- l'heure de l'horloge commune des satellites extraite à partir du biais d'horloge entre l'horloge commune des satellites et l'horloge de ladite station radio mis à jour par ledit procédé de mise à jour.

Avantageusement, lesdites informations horaires associées à ladite station radio sont transférées en temps que date référence du signal radio BTS sous la forme de références d'hyper trames, de super-trames, de multi-trames et de numéro de bit et l'heure de l'horloge commune des satellites est associée à ladite date référence BTS.

Selon un deuxième mode de réalisation, ledit procédé d'amélioration par un serveur d'assistance comporte les étapes suivantes :
- transmission de données d'assistance par ledit serveur d'assistance, lesdites données d'assistance comportant un biais d'horloge entre l'horloge commune des satellites et l'horloge de ladite station radio mis à jour par un procédé de mise à jour selon le deuxième mode de réalisation de l'invention,
- insertion par ladite station radio, dans un signal radio émis vers le dispositif mobile, de la date d'émission dudit signal radio par ladite station radio.

Ainsi, les données d'assistance fournies à un dispositif mobile comprennent le biais d'horloge mis à jour entre l'horloge commune des satellites et l'horloge de la station radio associée au dispositif mobile. Le signal radio comprenant en outre la date d'émission du signal radio de données d'assistance par la station radio, le dispositif mobile a donc accès à une estimation précise de son biais d'horloge avec la station radio et, par simple différence, à une estimation précise de son biais d'horloge avec les satellites. En effet à la réception du signal radio, le mobile connaît, à la durée négligeable de trajet près, la date de l'horloge de la station de base ainsi que la différence d'horloge entre la station de base et le système satellitaire.

La présente invention a également pour objet un procédé de calcul de la position d'un dispositif mobile comportant un récepteur de radionavigation satellitaire RNSS dans un système asynchrone de radiotéléphonie cellulaire comportant les étapes suivantes :
- amélioration par un serveur d'assistance de l'acquisition de données satellitaires par ledit dispositif mobile par un procédé d'amélioration selon l'invention,
- acquisition des données satellitaires par ledit dispositif mobile,
- calcul par ledit dispositif mobile de pseudo-distances entre ledit dispositif mobile et les satellites à partir desdites données satellitaires,
- détermination par ledit serveur d'assistance ou par ledit dispositif mobile de la position dudit dispositif mobile.

On voit ici que le procédé de calcul de la position d'un dispostif mobile fonctionne autant pour un dispositif mobile du type MS-assisted (détermination de la position par le serveur) que pour un dispositif mobile du type MS-based (détermination de la position par le dispositif mobile).

La présente invention a également pour objet un dispositif mobile comportant un récepteur de radionavigation satellitaire RNSS dans un système asynchrone de radiotéléphonie cellulaire et des moyens de détermination de la position dudit dispositif mobile par le procédé de calcul de la position selon l'invention.

La présente invention a enfin pour objet un procédé de mise à jour du biais d'horloge existant entre l'horloge commune des satellites d'un système de radionavigation satellitaire RNSS et l'horloge d'une station radio d'un système asynchrone de radiotéléphonie cellulaire, ledit système asynchrone de radiotéléphonie cellulaire comportant en outre :
- au moins un dispositif mobile incluant un récepteur de radionavigation satellitaire RNSS recevant des données satellitaires fournies par au moins quatre satellites et échangeant un signal radio avec ladite station radio,
- au moins un serveur d'assistance pour l'amélioration de l'acquisition de données satellitaires par ledit dispositif mobile,
ledit procédé comportant les étapes suivantes :
- réception par ledit dispositif mobile desdites données satellitaires,
- calcul par ledit dispositif mobile des pseudo distances entre ledit dispositif mobile et lesdits satellites,
- détermination par ledit dispostif mobile de la position dudit dispositif mobile et estimation par ledit dispositif mobile du biais d'horloge entre l'horloge commune desdits satellites et l'horloge de ladite station radio en utilisant lesdites pseudo distances et ladite date à laquelle lesdites pseudo distances ont été calculées, ladite date à laquelle lesdites pseudo distances ont été calculées correspondant aux informations horaires fournies par ladite station radio.

Un tel procédé permet la mise à jour du biais d'horloge existant entre l'horloge commune des satellites d'un système de radionavigation satellitaire RNSS et l'horloge d'une station radio à partir d'un dispositif portable utilisant une technologie MS-based.

D'autres caractéristiques et avantages de la présente invention apparaîtront dans la description suivante d'un mode de réalisation de l'invention donné à titre illustratif et nullement limitatif.

Dans les figures suivantes :
- La figure 1 représente un système de télécommunication selon l'état de la technique,
- La figure 2 représente un système de télécommunication mettant en oeuvre le procédé de mise à jour de biais d'horloge selon un premier mode de réalisation de l'invention,
- La figure 3 représente un système de télécommunication tel que représenté en figure 2 mettant en oeuvre un procédé d'amélioration par un serveur d'assistance de l'acquisition de données satellitaires selon un premier mode de réalisation de l'invention.
- La figure 4 représente un système de télécommunication mettant en oeuvre le procédé de mise à jour de biais d'horloge selon un deuxième mode de réalisation de l'invention,
- La figure 5 représente un système de télécommunication tel que représenté en figure 4 mettant en oeuvre un procédé d'amélioration par un serveur d'assistance de l'acquisition de données satellitaires selon un deuxième mode de réalisation de l'invention.

La figure 1 a déjà été décrite en relation avec l'état de la technique.

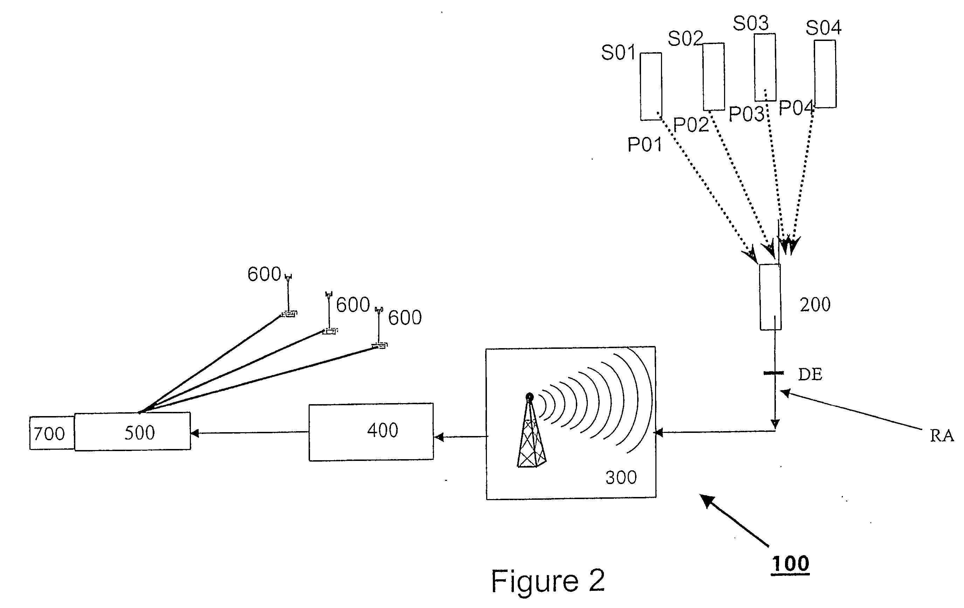

La figure 2 représente un système 100 de télécommunication comportant un serveur d'assistance 500. Comme sur la figure 1, un dispositif mobile 200 tel qu'un téléphone portable fonctionnant sur un réseau téléphonique 400 du type GSM et comportant un récepteur GPS cherche à calculer sa position à partir de signaux pseudo-aléatoires P01 à P04 émis par les quatre satellites S01 à S04. Pour cela, le dispositif 200 envoie une requête non représentée sous la forme d'un signal radio sur le réseau téléphonique 400. Cette requête transite via une station radio de base 300 du type BTS (Base Transceiver Station) associée à la cellule dans laquelle se trouve le dispositif mobile 200. La requête est traitée par le serveur 500 qui reçoit en temps réel des informations satellitaires via des stations radio 600 fixes et équipées de récepteurs GPS recevant des informations non représentées.

A partir des signaux P01 à P04 et des informations d'assistance fournies par le serveur 500 lui permettant notamment de déterminer l'effet Doppler des satellites, le dispositif mobile 200 calcule les pseudo-distances par rapport aux quatre satellites S01 à S04.

Le dispositif mobile 200 utilise une technologie MS-assisted c'est à dire que le calcul de sa position est réalisé par le serveur 500 et non par le dispositif mobile 200.

Ainsi, les pseudo distances sont transmises sous la forme d'un signal radio RA vers le serveur d'assistance 50. Avant d'arriver au serveur 50, ce signal RA va transiter par la station de base 30 puis par le réseau téléphonique GSM 40.

Le signal RA comporte en outre une datation DE correspondant à la date de mesure des pseudo-distances par le dispositif mobile 20. Pour réaliser cette datation, on utilise le signal GSM. La datation des pseudo-distances se fait grâce à la structure du message GSM décomposé en super-trames elles-mêmes décomposées en trames elles-mêmes décomposées en temps bit ; on peut associer un numéro à chacun de ces éléments (hyper, super, multi-trames, trames, bit) correspondant à la date de calcul des pseudo-distances.

Après acheminement par la station de base 300 et le réseau 400, le serveur 500 reçoit le signal RA.

Le serveur 500 va ensuite déterminer la position du dispositif mobile ainsi que la différence de temps qui existe entre la datation du calcul des pseudo-distances et l'horloge des satellites GPS. Le serveur 500 a ainsi directement accès au biais ΔH = Hₛₐₜ - H_{BTS} existant entre l'horloge Hₛₐₜ des satellites S01 à S04 et l'horloge H_{BTS} de la station de base 300.

Ce biais d'horloge ΔH est enregistré dans une base de données 700 du serveur 500.

De cette manière, dans un réseau asynchrone du type GSM, le serveur d'assistance A-GPS 500 connaît le biais d'horloge existant entre la station radio de base BTS 300 et les satellites du système GPS. La mise à jour du biais d'horloge de la station radio 300 se fera à chaque fois qu'un serveur d'assistance calcule la position d'un dispositif mobile se trouvant dans la cellule associée à la station 300 et utilisant une technologie MS-assisted. La mise à jour de la base de données 700 est donc auto-entretenue à chaque fois qu'un dispositif mobile utilisant une technologie MS-assisted cherche à déterminer sa position.

Notons toutefois qu'il est également possible d'entretenir la base de données 700 en utilisant un dispositif mobile se trouvant dans la cellule associée à la station 300 et utilisant une technologie MS-based. Dans ce cas, le dispositif mobile calcule lui-même sa position. Une solution consiste alors à calculer cette position en prenant comme référence de temps de calcul des pseudo-distances, la datation du signal GSM échangé avec la station de base. Ainsi, le dispositif mobile calcule en même temps sa position et le biais ΔH = Hₛₐₜ - H_{BTS} existant entre l'horloge Hₛₐₜ des satellites S01 à S04 et l'horloge H_{BTS} de la station de base 300. Le dispositif mobile peut ensuite renvoyer sa position et le biais au serveur afin de mettre à jour la base de données.

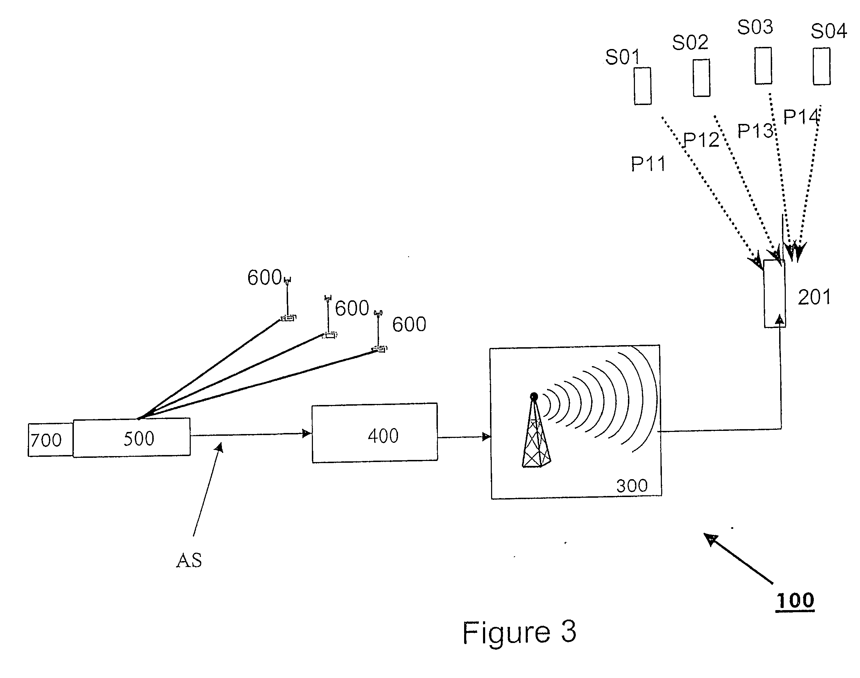

L'utilisation de la base de données 700 comportant la mise à jour du biais d'horloge existant entre l'horloge Hₛₐₜ des satellites S01 à S04 et l'horloge H_{BTS} de la station de base 300 sera mieux comprise au regard de la figure 3 qui représente un système 100 identique à celui de la figure 2 à la différence qu'un second dispositif mobile 201 souhaitant obtenir sa position par rapport aux satellites S01 à S04 reçoit cette fois un signal d'assistance AS provenant du serveur d'assistance 50.

Afin d'illustrer l'utilisation de la base de données 700, nous prendrons un dispositif mobile 201 appartenant à la même cellule que le dispositif mobile 200 représenté en figure 2. Les données d'assistance AS transitent donc par le réseau 400 et la station de base 300 avant d'arriver au dispositif mobile 201.

Lorsque le serveur 500 reçoit une requête d'assistance non représentée du dispositif mobile 200, cette requête comporte une indication permettant d'identifier la station de base 300. Le serveur 500 va donc chercher dans la base de données 700 le biais d'horloge ΔH mis à jour existant entre l'horloge Hₛₐₜ des satellites et l'horloge H_{BTS} de la station de base 300.

De ce biais d'horloge ΔH, le serveur 500 extrait la date de la station de base ayant permis le calcul de ΔH ainsi que l'heure correspondante de l'horloge Hₛₐₜ des satellites.

Ces deux informations sont insérées dans le signal AS de données d'assistance. Ce signal AS est ensuite transmis au dispositif mobile 200 via le réseau 400 et la station de base 300. L'insertion de ces deux informations peut être réalisée comme suit :
- transmission d'un top horaire BTS calé sur un événement (Hyper, super, multi trames, trames, bit)
- association à ce top horaire d'une heure GPS.

Dès lors, le dispositif mobile 200 dispose de la date de la station de base ainsi que l'heure correspondante de l'horloge Hₛₐₜ des satellites. Il suffit au dispositif mobile 200 d'attendre le passage de la date de la station de base ayant permis le calcul de ΔH pour se caler sur l'heure correspondante de l'horloge Hₛₐₜ des satellites.

Cette horloge Hₛₐₜ lui permet de synchroniser sa propre horloge et de réduire considérablement le balayage temporel lui permettant d'acquérir les signaux pseudo aléatoires P11 à P14 des satellites S01 à SO4.

Ces signaux pseudo aléatoires vont ensuite permettre au dispositif mobile 200 de calculer des pseudo distances.

Notons que le dispositif mobile 200 peut utiliser soit une technologie MS-based (dans ce cas, il calcule directement sa position à partir des pseudo distances) soit une technologie MS-assisted (dans ce cas, il fournit les pseudo distances au serveur 500 qui calcule sa position).

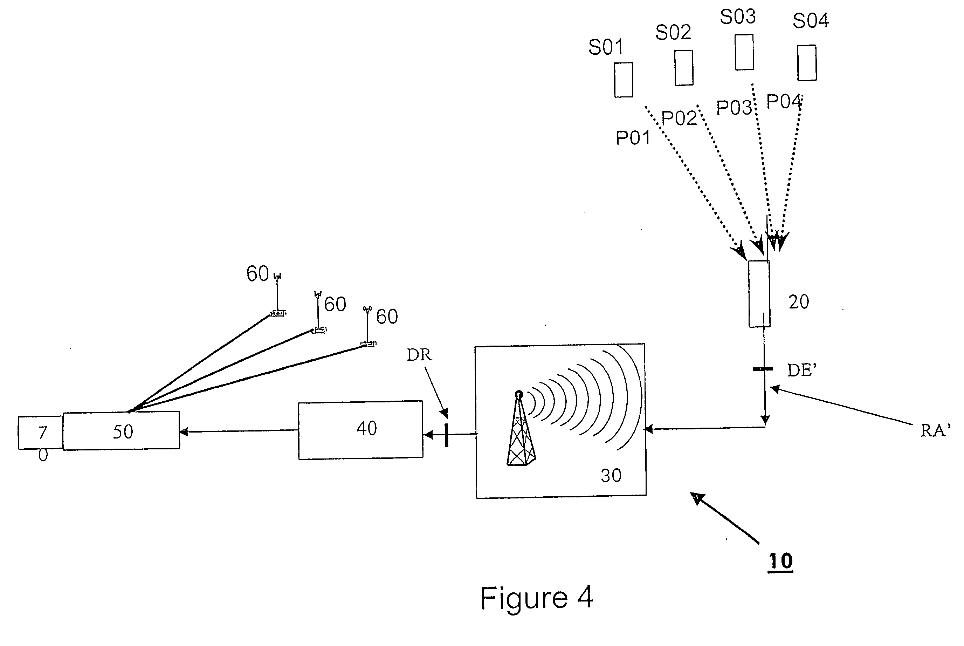

La figure 4 représente un système 10 de télécommunication comportant un serveur d'assistance 50. Comme sur la figure 1, un dispositif mobile 20 tel qu'un téléphone portable fonctionnant sur un réseau téléphonique 40 du type GSM et comportant un récepteur GPS cherche à calculer sa position à partir de signaux pseudo-aléatoires P01 à P04 émis par les quatre satellites S01 à S04. Pour cela, le dispositif 20 envoie une requête non représentée sous la forme d'un signal radio sur le réseau téléphonique 40. Cette requête transite via une station radio de base 30 du type BTS (Base Transceiver Station) associée à la cellule dans laquelle se trouve le dispositif mobile 20. La requête est traitée par le serveur 50 qui reçoit en temps réel des informations satellitaires via des stations radio 60 fixes et équipées de récepteurs GPS recevant des informations non représentées.

A partir des signaux P01 à P04 et des informations d'assistance fournies par le serveur 50 lui permettant notamment de déterminer l'effet Doppler des satellites, le dispositif mobile 20 calcule les pseudo-distances par rapport aux quatre satellites S01 à S04.

Le dispositif mobile 20 utilise une technologie MS-assisted c'est à dire que le calcul de sa position est réalisé par le serveur 50 et non par le dispositif mobile 20.

Ainsi, les pseudo distances sont transmises sous la forme d'un signal radio RA' vers le serveur d'assistance 50. Avant d'arriver au serveur 50, ce signal RA' va transiter par la station de base 30 puis par le réseau téléphonique GSM 40.

Le signal RA' comporte également la datation de mesure des pseudodistances déterminée à partir de l'horloge du dispositif mobile 20.

Le signal RA' comporte, outre la datation de mesure des pseudodistances, une estampille temporelle DE' marquée par le dispositif mobile 20 et correspondant à la date d'émission de ce signal RA' par le dispositif mobile 20.

Le signal RA' est ensuite reçu par la station de base 30 qui marque à son tour le signal RA' d'une estampille temporelle DR correspondant à la date d'émission dudit signal RA par la station de base 30 sous la forme d'un signal radio.

Après acheminement par le réseau 40, le serveur d'assistance 50 reçoit le signal RA' marqués des estampilles temporelles DE' et DR.

Le serveur 50 va alors calculer, à partir des pseudo distances, la position du dispositif mobile 20 ainsi qu'un premier biais d'horloge ΔH₁ existant entre l'horloge H_{mob} du dispositif mobile 20 et l'horloge commune Hₛₐₜ des satellites : ΔH₁ = H_{mob} - Hₛₐₜ.

Le serveur 50 va également calculer à partir des estampilles temporelles DE et DR, un deuxième biais d'horloge ΔH₂ existant entre l'horloge H_{mob} du dispositif mobile 20 et l'horloge H_{BTS} de la station de base 30 : ΔH₂ = H_{mob} - H_{BTS}.

En négligeant le temps de transfert du signal RA pour passer du dispositif mobile 20 à la station de base 30, de l'ordre de quelques microsecondes, le deuxième biais d'horloge ΔH₂ est donné par la relation : ΔH₂ = DE - DR.

Dès lors, en effectuant la différence entre ΔH₂ et ΔH₁, le serveur 50 obtient un troisième biais d'horloge ΔH₃ entre l'horloge Hₛₐₜ des satellites S01 à S04 et l'horloge H_{BTS} de la station de base 30 : ΔH₃ = Hₛₐₜ - H_{BTS}.

Ce troisième biais d'horloge ΔH₃ est enregistré dans une base de données 70 du serveur 50.

De cette manière, dans un réseau asynchrone du type GSM, le serveur d'assistance A-GPS 50 connaît, par différence de deux biais d'horloge, le biais d'horloge existant entre la station radio de base BTS 30 et les satellites du système GPS. La mise à jour du biais d'horloge de la station radio 30 se fera à chaque fois qu'un serveur d'assistance calcule la position d'un dispositif mobile se trouvant dans la cellule associée à la station 30 et utilisant une technologie MS-assisted. La mise à jour de la base de données 70 est donc auto-entretenue à chaque fois qu'un dispositif mobile utilisant une technologie MS-assisted cherche à déterminer sa position.

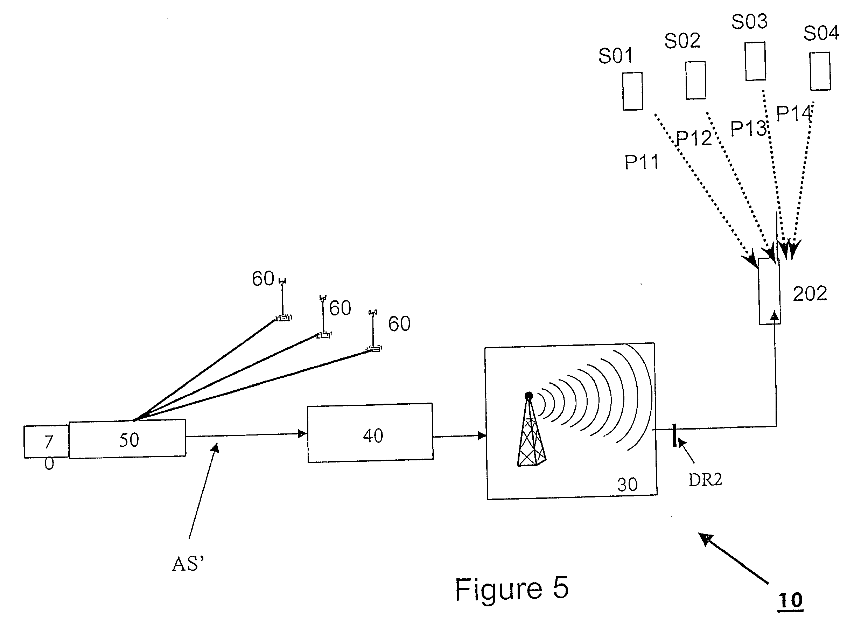

L'utilisation de la base de données 70 comportant la mise à jour du biais d'horloge existant entre l'horloge Hₛₐₜ des satellites S01 à S04 et l'horloge H_{BTS} de la station de base 30 sera mieux comprise au regard de la figure 5 qui représente un système 10 identique à celui de la figure 4 à la différence qu'un second dispositif mobile 202 souhaitant obtenir sa position par rapport aux satellites S01 à S04 reçoit cette fois un signal d'assistance AS' provenant du serveur d'assistance 50.

Afin d'illustrer l'utilisation de la base de données 70, nous prendrons un dispositif mobile 202 appartenant à la même cellule que le dispositif mobile 20 représenté en figure 4. Les données d'assistance AS' transitent donc par le réseau 40 et la station de base 30 avant d'arriver au dispositif mobile 202.

Lorsque le serveur 50 reçoit une requête d'assistance non représentée du dispositif mobile 202, il va chercher dans la base de données 70 le biais d'horloge ΔH₃ mis à jour existant entre l'horloge Hₛₐₜ des satellites et l'horloge H_{BTS} de la station de base 30.

Selon un premier mode de fonctionnement, ce biais d'horloge ΔH₃ est utilisé pour fournir à l'utilisateur (MS) la date GPS dans le signal AS' de données d'assistance. Une implémentation possible consiste à fournir une date référence BTS (un top) (hyper, super, multi trames, trames, bit) à laquelle est associée une date GPS. Ce signal AS' est ensuite transmis sur le réseau 40 puis vers le mobile via la station de base 30. Le dispositif mobile 202 dispose ainsi de ΔH₃ et par conséquent de a date GPS au passage du Top horloge BTS référencé

Selon un second mode de fonctionnement, ce biais d'horloge ΔH₃ est inséré dans le signal AS' de données d'assistance. Ce signal AS' est ensuite transmis sur le réseau 40 puis vers la station de base 30 qui marque le signal AS' d'une estampille temporelle DR2 correspondant à la date de réception par la station 30 du signal AS'.

Le dispositif mobile 202 dispose ainsi de ΔH₃ et de DR2 et a donc accès en effectuant la différence de ces deux valeurs à l'horloge commune des satellites Hₛₐₜ.

Cette horloge Hₛₐₜ lui permet de synchroniser sa propre horloge et de réduire considérablement le balayage temporel lui permettant d'acquérir les signaux pseudo aléatoires P11 à P14 des satellites S01 à SO4.

Ces signaux pseudo aléatoires vont ensuite permettre au dispositif mobile 202 de calculer des pseudo distances.

Notons que le dispositif mobile 202 peut utiliser soit une technologie MS-based (dans ce cas, il calcule directement sa position à partir des pseudo distances) soit une technologie MS-assisted (dans ce cas, il fournit les pseudo distances au serveur 50 qui calcule sa position).

Bien entendu, l'invention n'est pas limitée au mode de réalisation qui vient d'être décrit.

Notamment, l'invention a été décrite dans le cas d'un système GPS mais il peut d'agir d'un autre système RNSS tel qu'un récepteur du type GLONASS ou GALILEO.

## Revendications

1. Procédé de mise à jour du biais d'horloge existant entre l'horloge commune des satellites (S01 à S04) d'un système de radionavigation satellitaire RNSS et l'horloge d'une station radio (30, 300) d'un système asynchrone de radiotéléphonie cellulaire, ledit système synchrone de radiotéléphonie cellulaire comportant en outre :
- au moins un dispositif mobile (20, 200) incluant un récepteur de radionavigation satellitaire RNSS recevant des données satellitaires (P01 à P04) fournies par au moins quatre satellites (S01 à S04),
- au moins un serveur d'assistance (50, 500) pour l'amélioration de l'acquisition de données satellitaires par ledit dispositif mobile (20, 200), ledit procédé comportant les étapes suivantes :
- réception par ledit dispositif mobile (20, 200) d'une part desdites données satellitaires (P01 à P04), et d'autre part de données d'assistance fournies par le serveur d'assistance pour déterminer l'effet Doppler lié aux signaux satellitaires,
- calcul par ledit dispositif mobile (20, 200) des pseudo distances entre ledit dispositif mobile (20, 200) et lesdits satellites (S01 à S04),
- encapsulation desdites pseudo distances avec la date (DE, DE') à laquelle lesdites pseudo distances ont été calculées, la date (DE, DE') à laquelle lesdites pseudo distances ont été calculées correspondant aux informations horaires fournies par ladite station radio (30, 300),
- transmission desdites pseudo distances et de ladite date (DE, DE') à laquelle lesdites pseudo distances ont été calculées sous la forme d'un signal radio dudit dispositif mobile (20, 200) vers ledit serveur d'assistance (50, 500) via un passage par ladite station radio (30, 300),
- détermination par ledit serveur d'assistance (50, 500) de la position dudit dispositif mobile et estimation par ledit serveur (50, 500) du biais d'horloge entre l'horloge commune desdits satellites (S01 à S04) et l'horloge de ladite station radio (30, 300) en utilisant lesdites pseudo distances et ladite date (DE, DE') à laquelle lesdites pseudo distances ont été calculées.

2. Procédé selon la revendication 1 **caractérisé en ce que** la date (DE') à laquelle lesdites pseudo distances ont été calculées correspond à la date issue de l'horloge dudit dispositif mobile (20) à laquelle lesdites pseudo distances ont été calculée, ledit procédé comportant les étapes suivantes :
- insertion par ledit dispositif mobile (20) dans ledit signal radio de la date d'émission dudit signal radio par ledit dispositif mobile (20),
- insertion par ladite station radio (30) dans ledit signal radio de la date de réception dudit signal radio par ladite station radio (30),
- détermination par ledit serveur d'assistance (50) d'un premier biais d'horloge entre l'horloge dudit dispositif mobiles (20) et l'horloge commune desdits satellites (S01 à S04),
- estimation par lendit serveur d'assistance (50) d'un deuxième biais d'horloge entre l'horloge dudit dispositif mobile (20) et l'horloge de ladite station radio (30) en effectuant la différence entre ladite date d'émission et ladite date de réception,
- déduction du biais d'horloge entre l'horloge commune desdits satellites (S01 à S04) et l'horloge de ladite station radio (30) en effectuant la différence entre lesdits premier et deuxième biais d'horloge.

3. Procédé selon l'une des revendications précédentes **caractérisé en ce que** ledit biais d'horloge entre l'horloge commune desdits satellites (S01 à S04) et l'horloge de ladite station radio (30) est enregistré dans une base de données de mise à jour (70, 700).

4. Procédé Selon l'une des revendications précédentes **caractérisé en ce que** ladite estimation du biais d'horloge entre l'horloge commune desdits satellites (S01 à S04) et l'horloge de ladite station radio (30, 300) est réalisée par ledit serveur d'assistance(50, 500).

5. Procédé selon l'une des revendications 1 à 3 **caractérisé en ce que** ladite estimation du biais d'horloge entre l'horloge commune desdits satellites (S01 à S04) et l'horloge de ladite station radio (30, 300) est réalisée par ledit dispositif mobile (20).

## Claims

1. Method of updating the clock bias between the common clock of the satellites (S01 to S04) of a radio navigation satellite system (RNSS) and the clock of a radio station (30, 300) of an asynchronous cellular radiotelephone system including a mobile device further including:
- at least one mobile device (20, 200) including a radio navigation satellite system (RNSS) receiver for receiving satellite data (P01 to P04) supplied by at least four satellites (S01 to S04), and
- at least one assistance server (50, 500) for improving the acquisition of satellite data by said mobile device (20, 200),
said method including the following steps:
- said mobile device (20, 200) receiving on the one hand said satellite data (P01 to P04) and on the other hand assistance data provided by the assistance server for determining the Doppler effect linked to the satellite signals,
- said mobile device (20, 200) calculating pseudodistances between itself and said satellites (S01 to S04),
- encapsulating said pseudodistances with the time (DE, DE') at which said pseudodistances are calculated, the time (DE, DE') at which said pseudodistances are calculated corresponding to time information supplied by said radio station (30, 300),
- transmitting said pseudodistances and said time (DE, DE') at which said pseudodistances are calculated in the form of a radio signal from said mobile device (20, 200) to said assistance server (50, 500) via said radio station (30, 300), and
- said assistance server (50, 500) determining the position of said mobile device and estimating the clock bias between the common clock of said satellites (S01 to S04) and the clock of said radio station (30, 300) using said pseudodistances and said time (DE, DE') at which said pseudodistances are calculated.

2. Method according to claim 1, **characterized in that** the time (DE') at which said pseudodistances are calculated is the time according to the clock of said mobile device (20) at which said pseudodistances are calculated, said method including the following steps:
- said mobile device (20) inserting into said radio signal the time it sends said radio signal,
- said radio station (30) inserting into said radio signal the time it receives said radio signal,
- said assistance server (50) determining a first clock bias between the clock of said mobile device (20) and the common clock of said satellites (S01 to S04),
- said assistance server (50) estimating a second clock bias between the clock of said mobile device (20) and the clock of said radio station (30) by establishing the difference between said sending time and said receiving time, and
- deducing the clock bias between the common clock of said satellites (S01 to S04) and the clock of said radio station (30) by establishing the difference between said first and second clock bias values.

3. Method according to either of the preceding claims**, characterized in that** said clock bias between the common clock of said satellites (S01 to S04) and the clock of said radio station (30) is stored in an update database (70, 700).

4. Method according to any one of the preceding claims, **characterized in that** the clock bias between the common clock of said satellites (S01 to S04) and the clock of said radio station (30, 300) is estimated by said assistance server (50, 500).

5. Method according to any one of claims 1 to 3, **characterized in that** the clock bias between the common clock of said satellites (S01 to S04) and the clock of said radio station (30, 300) is estimated by said mobile device (20).

## Patentansprüche

1. Verfahren zur Aktualisierung des Taktgeber-Bias, welcher zwischen dem gemeinsamen Taktgeber der Satelliten (S01 bis S04) eines Satelliten-Funknavigationssystems RNSS und dem Taktgeber einer Funkstation (30, 300) eines asynchronen zellulären Funktelefoniesystems besteht, wobei das besagte asynchrone zelluläre Funktelefoniesystem weiterhin umfasst:
- mindestens eine Mobilvorrichtung (20, 200), welche einen Satelliten-Funknavigationsempfänger RNSS umfasst, welcher die von mindestens vier Satelliten (S01 bis S04) bereitgestellten Satellitendaten (P01 bis P04) empfängt;
- mindestens einen Hilfsserveur (50, 500) zum Verbessern der Erfassung der Satellitendaten durch die besagte Mobilvorrichtung (20, 200),
wobei das besagte Verfahren die folgenden Schritte umfasst:
- Empfangen, durch die besagte Mobilvorrichtung (20, 200), der besagten Satellitendaten (P01 bis P04), einerseits, und der vom Hilfsserver bereitgestellten Hilfsdaten, andererseits, um den mit den Satellitensignalen verbundenen Dopplereffekt zu ermitteln,
- Errechnen, durch die besagte Mobilvorrichtung (20, 200), der Pseudoentfernungen zwischen der besagten Mobilvorrichtung (20, 200) und den besagten Satelliten (S01 bis S04),
- Einkapseln der besagten Pseudoentfernungen mit dem Datum (DE, DE'), an welchem die besagten Pseudoentfernungen errechnet wurden, wobei das Datum (DE, DE'), an welchem die besagten Pseudoentfernungen errechnet wurden, den von der besagten Funkstation (30, 300) bereitgestellten Zeitinformationen entspricht,
- Übertragen der besagten Pseudoentfernungen und des besagten Datums (DE, DE'), an welchem die besagten Pseudoentfernungen errechnet wurden, in der Form eines Funksignals der besagten Mobilvorrichtung (20, 200) an den besagten Hilfsserver (50, 500) bei Durchlaufen der besagten Funkstation (30, 300),
- Ermitteln, durch den besagten Hilfsserver (50, 500), der Position der besagten Mobilvorrichtung, und Schätzung, durch den besagten Hilfsserver (50, 500), des Taktgeber-Bias zwischen dem gemeinsamen Taktgeber der besagten Satelliten (S01 bis S04) und dem Taktgeber der besagten Funkstation (30, 300) unter Verwenden der besagten Pseudoentfernungen und des Datums (DE, DE'), an welchem die besagten Pseudoentfernungen errechnet wurden.

2. Verfahren nach Anspruch 1, **dadurch gekennzeichnet, dass** das Datum (DE, DE'), an welchem die besagten Pseudoentfernungen errechnet wurden, dem aus dem Taktgeber der besagten Mobilvorrichtung (20) hervorgehendem Datum, an welchem die besagten Pseudoentfernungen errechnet wurden, entspricht, wobei das Verfahren die folgenden Schritte umfasst:
- Einfügen, durch die besagte Mobilvorrichtung (20), des Datums, an welchem das besagte Funksignal von der besagten Mobilvorrichtung (20) gesendet wurde, in das besagte Funksignal,
- Einfügen, durch die besagte Funkstation (30), des Datums, an welchem das besagte Funksignal von der besagten Funkstation empfangen wurde, in das besagte Funksignal,
- Ermitteln, durch den besagten Hilfsserver (50), eines ersten Taktgeber-Bias zwischen dem Taktgeber der besagten Mobilvorrichtung (20) und dem gemeinsamen Taktgeber der besagten Satelliten (S01 bis S04),
- Schätzung, durch den besagten Hilfsserver (50), eines zweiten Taktgeber-Bias zwischen dem Taktgeber der besagten Mobilvorrichtung (20) und dem Taktgeber der besagten Funkstation (30) unter Berücksichtigung der Differenz zwischen dem besagten Sendedatum und dem besagten Empfangsdatum,
- Ableiten des Taktgeber-Bias zwischen dem gemeinsamen Taktgeber der besagten Satelliten (S01 bis S04) und dem Taktgeber der besagten Funkstation (30) durch Durchführen der Differenz zwischen dem besagten ersten und dem besagten zweiten Taktgeber-Bias.

3. Verfahren nach einem der vorstehenden Ansprüche, **dadurch gekennzeichnet, dass** der besagte Taktgeber-Bias zwischen dem gemeinsamen Taktgeber der besagten Satelliten (S01 bis S04) und dem Taktgeber der besagten Funkstation (30) in einer Aktualisierungsdatenbank (70, 700) gespeichert wird.

4. Verfahren nach einem der vorstehenden Ansprüche, **dadurch gekennzeichnet, dass** die besagte Schätzung des Taktgeber-Bias zwischen dem gemeinsamen Taktgeber der besagten Satelliten (S01 bis S04) und dem Taktgeber der besagten Funkstation (30, 300) durch den besagten Hilfsserver (50, 500) durchgeführt wird.

5. Verfahren nach einem der Ansprüche 1 bis 3, **dadurch gekennzeichnet, dass** die besagte Schätzung des Taktgeber-Bias zwischen dem gemeinsamen Taktgeber der besagten Satelliten (S01 bis S04) und dem Taktgeber der besagten Funkstation (30, 300) durch die besagte Mobilvorrichtung (20) durchgeführt wird.
